# EUROPEAN PATENT APPLICATION

(11) **EP 3 051 667 A1**
(43) Date of publication of application: **03.08.2016**
(21) Application number: 16153281.7
(22) Date of filing: 29.01.2016
(51) Int. Cl.: H02K 1/14, H01F 27/24, H01F 41/02, H02K 9/19, H02K 15/02, H02K 15/14, H02K 1/16, H02K 1/18, H02K 1/08

(54) **A STATOR FOR AN ELECTRICAL MACHINE**

(30) Priority: 30.01.2015 GB 201501579
(71) Applicant: Nidec SR Drives Ltd., Harrogate North Yorkshire HG3 1PR (GB)
(72) Inventor: Dickinson, Phillip George, Harrogate, HG3 2NX (GB)
(74) Representative: Korenberg, Alexander Tal

(57) **Abstract**

An electrical machine has a lamination core assembled with an interference fit into a frame. The core has notches around the surface forming the interference fit which reduce the stress in the frame. The notches extend from the outer surface of the core towards the centre of the machine. This invention is particularly beneficial when the operating or storage temperature is reduced to a low value. The invention also applies to the fitting of a shaft into a rotor core.

## Description

The present invention generally relates to a stator for use in an electrical machine. More particularly, the present invention relates to electrical machines in which the stator is contained within a frame and has concentrated windings around salient poles.

Electrical machines typically comprise a stator with one or more windings connected to an electrical supply and a rotor arranged to rotate either inside or outside the stator. Typically, both the stator and rotor are built up from laminations of electrical sheet steel, the stacks of laminations being consolidated into blocks usually known as the stator core and rotor core. The type of enclosure used to contain the stator core can take many forms: machines using a "frameless" construction which have no or virtually no frame surrounding the stator core and are common in small sizes in domestic appliances; machines using only a rudimentary frame to protect the stator from dust or splashing water; through to machines which have a fully enclosing frame which is designed to withstand the torque reaction from the stator and transmit it to the environment around the machine. This invention relates particularly to this last class of machines having a frame which surrounds and contains the stator.

In order to hold the stator securely in the frame against the torque reaction, it is common practice to assemble the stator into the frame with an interference fit. The interference fit has the added benefit of reducing the thermal impedance between the stator core and the frame and it is common practice to provide a cooling jacket of some sort in the frame to extract losses in the machine and dissipate them elsewhere. The frame can be made in different ways, e.g. it can be fabricated from pre-formed pieces of metal or cast from a molten metal, typically aluminium or iron. Aluminium has the benefit of producing a lighter frame for a required strength and is relatively easy to machine to the finished dimensions required.

The assembly of the core into the frame with an interference fit typically falls into one of two categories: pressing the two components together at ambient temperature, which is often used for smaller machines; and using thermal expansion or contraction of one or both components so that the interference fit is temporarily removed while the components are slid together. Assuming that the frame and core are basically concentric cylinders, then after assembly with an interference fit the inner cylinder, i.e., the core, is compressed and the outer cylinder, i.e., the frame, is expanded. The extent to which this occurs depends on the relative stiffness of the two parts. Typically the core is much stiffer than the frame because it is made from electrical steel and the requirements of the electromagnetic design produce a stiff structure. By contrast, the frame (particularly if made from aluminium) is much less stiff because the other mechanical and thermal requirements are generally satisfied without making the frame very thick, and the designer is usually under commercial pressure to make the frame as light as possible.

Because of the differing temperature coefficients of expansion of steel and aluminium, the degree of interference is dependent on the temperature of the components. An interference of, for example, 0.2mm at an ambient of 20oC, will diminish as the temperature of the components rises to a working temperature of 150oC and the designer must ensure that it is still sufficient to provide the required torque transmission at that temperature. On the other hand, as the temperature is reduced to, say, a minimum storage temperature of -50oC, the stress in the aluminium frame rises and becomes a major design issue.

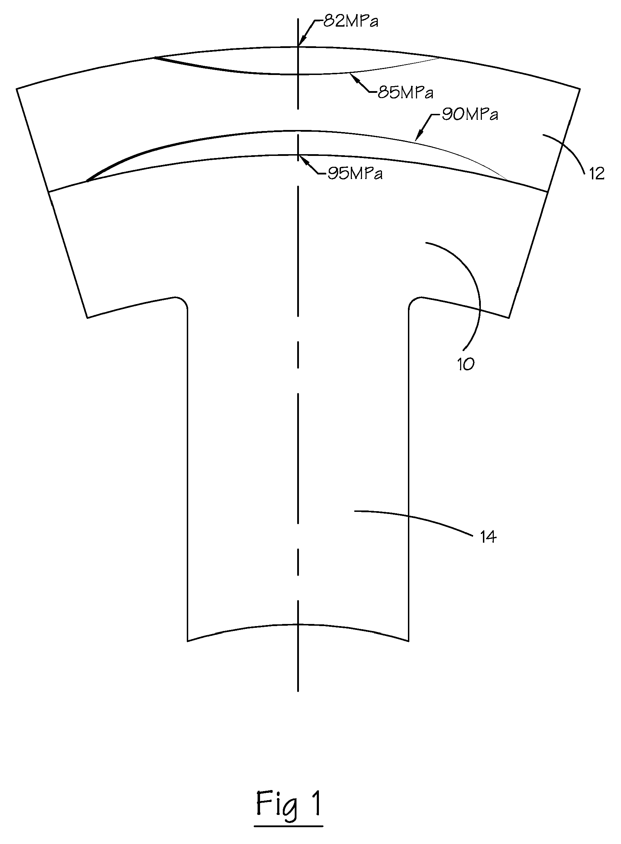

Figure 1 shows a segment 10 of an exemplary stator housed in an aluminium frame 12. The stator has salient poles 14, around which are placed one or more windings (not shown here for clarity). The poles extend inwards from the annular part of the stator, generally referred to as the back-iron. The aluminium frame is shown as a simple annulus for simplicity. The figure is drawn for an interference fit of 0.22mm at a temperature of 20oC. This amount of interference has been chosen to give adequate torque transmission at +150oC. The stress contours in the frame 12 due to the interference fit are marked with stress in MPa. Because the stator core is not uniform in a circumferential direction, the stress in the frame varies circumferentially. As would be expected, the stator is stiffest on the pole centre-line and the maximum stress in the frame 12 is centred on that line. The maximum stress is 95MPa; the minimum is 82MPa. These levels of stress would be considered to be within acceptable levels for an electrical machine.

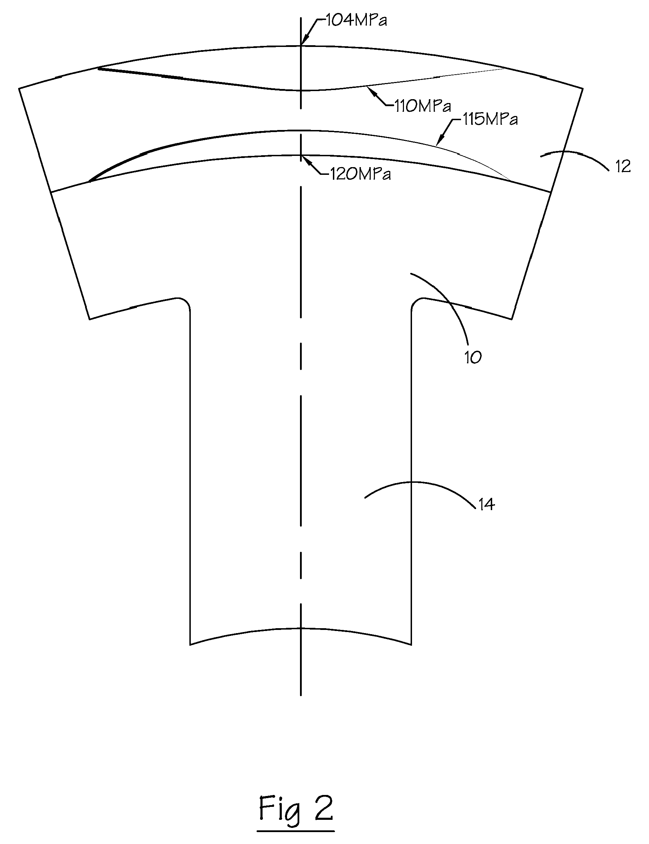

Figure 2 shows the same components at a temperature of -40oC, which is a typical minimum operating temperature for many applications. The minimum stress has now increased to 104MPa and the maximum has increased to 120MPa. These stress levels are for an idealised cylinder - in practice the frame would be required to have other features (eg mounting points, fins, cooling arrangements, etc) all of which would act as stress raisers. In addition, a cast frame is likely to have casting inclusions or other imperfections, which would also act as stress raisers. Cast aluminium typically has a yield stress of around 220MPa, but the figure for a practical frame with its inevitable stress raisers would be significantly lower. The safety margin for a practical frame is therefore likely to be eroded by the stress levels shown in Figure 2 for -40oC, so that permanent deformation or fracture of the frame might occur.

For the illustrative components shown, it is not possible to reduce the interference fit to reduce the stress in the frame, as that would compromise the torque transmission at +150oC. There is therefore a need for a stator design which, without increasing the frame thickness and suffering the consequent cost increase, is able to reduce stress in the frame while still maintaining the ability of the assembly to transmit the torque generated by the machine.

The present invention is defined in the accompanying independent claims. Preferred features of the invention are recited in the claims respectively dependent thereon.

In some embodiments, a stator core for an electrical machine is provided. The stator core defines a generally annular portion with stator poles extending radially inwards from the generally annular portion. One or more notches in an outer profile of the generally annular portion extend from the outer profile radially inwards, each notch being disposed angularly between sides of a respective stator pole and radially extending into the generally annular portion over at least half of a radial extent of the generally annular portion. Advantageously, by placing one or more notches in the generally annular portion of the stator pole, when the stator pole is mounted in a frame by way of interference fit, the maximum stress in the frame due to the interference fit with the stator is reduced for a given strength of the interference fit. This will be described in detail below.

Materials with different thermal expansion coefficients for the stator core and frame may be used. In this case there will also be variations of the stresses in the frame with temperature, which will be larger for larger differences in the thermal expansion coefficients of the stator core and frame. The larger the difference between the thermal expansion coefficients, therefore, the larger the benefit of the stress reduction provided by the notches. In some embodiments, the stator core is made from steel, for example magnetically soft steel as typically used for stator laminations, and the frame is made from aluminium or an aluminium alloy.

For the avoidance of doubt, the stator core may be provided with one or more notches, for example two or more, each of which is configured as described herein, without precluding the presence of other notches, otherwise configured. In some embodiments, one or more of the notches may be mutually differently configured in line with the present disclosure irrespective of whether other notches are also configured in line with the present disclosure or otherwise. In some embodiments there is provided at least one notch per stator pole, for example a single notch per stator pole. In some embodiments not every stator pole has a notch but the notches are still arranged with rotational symmetry. For example, every other pole may have a notch. In some embodiments, the positions of the notches relate to features in the frame which would otherwise result in stress raisers. In further embodiments, the notches do not extend the full axial length of the stator core.

In some embodiments, each notch may be centred on a radius coinciding with a centre of the respective stator pole. The notch may radially extend beyond the radial extent of the generally annular portion, into the respective stator pole. Each notch may extend angularly over a chord, which is between 20% and 50% of a radial depth of the notch.

In some embodiments, each notch may have sides extending radially and angularly outward from an inner notch root. Each notch may have a radiussed profile in the region of the inner notch root. Further, each notch may join the outer profile of the generally annular portion to form a radiused profile or fillet radius in the region where the notch and outer profile join. The notch may generally be provided with a rounded shape.

In some embodiments, each notch extends over an axial extent of the stator core, that is from one axial end face of the stator core to the other. In other embodiments, each notch extends only over a part of the radial extent of the stator core.

In some embodiments, the stator core is formed of a stack of laminations, which are shaped to be stacked together to form the stator core.

Some embodiments provide an electrical machine comprising a stator core as described above and a frame holding the stator core. The stator core and frame form an interference fit.

The electrical machine may, in some embodiments, comprise a coolant supply connected to the one or more notches to supply coolant to the one or more notches. Advantageously, in such embodiments the stress reducing benefit of the notches is combined with a cooling function without the need for additional cooling pipes. To this end, the outer profile of the stator core, at least in the regions on either side of each notch, may form a seal with the frame to retain coolant within the notches. In some embodiments, the seal is enhanced by the use of adhesive. In some embodiments a liner inside the notches is used to contain the sealant.

In some embodiments, the electrical machine is a switched reluctance machine.

Further embodiments provide a method for making a stator core to be held in a frame of an electrical machine by means of an interference fit. The method comprises preparing a stator core design by placing one or more notches in an outer profile of the stator core. The method further comprises adjusting the configuration of the notches to reduce stress in the frame, preferably while keeping an increase in flux path length in the machine to an acceptable level. The acceptable level of flux path length increase will depend on the design constraints of the stator core design and will vary from case to case. For each design process it is a set level above which the flux path increase is not allowed to rise. In some embodiments, the method includes making a stator core according to the stator core design.

Other aspects and advantages of the invention will become apparent upon reading the following detailed description of exemplary embodiments of the invention and upon reference to the accompanying drawings, in which:
Figure 1 shows a segment of a stator with stress contours in MPa for a temperature of 20oC;
Figure 2 shows the stator of Figure 1 at a temperature of -40oC;
Figure 3 shows a cross section of a stator according to an embodiment of the invention;
Figure 4 shows an enlarged view of part of the stator of Figure 3; and
Figure 5 shows the variation of stress in the frame with the width of the notch.

When components such as the stator and frame shown in Figures 1 & 2 are assembled with an interference fit, the components deflect from their individual positions due to the interface pressure produced by the interference fit. As the temperature of the stator shown in Figures 1 & 2 varies, the deflections of the components undergo further changes due to the changing strain produced by the thermal contraction or expansion. Due to the interference fit, the frame is displaced outwards in some regions and the stator core is displaced inwards in some regions, with the circumferential values of displacement being a function of the asymmetry of the stator. For example, calculations for the stress conditions given in Figure 2 show that the maximum outwards deflection of the frame is 0.18mm (at the interface with the stator) and the inwards deflection of the stator pole face is 0.04mm.

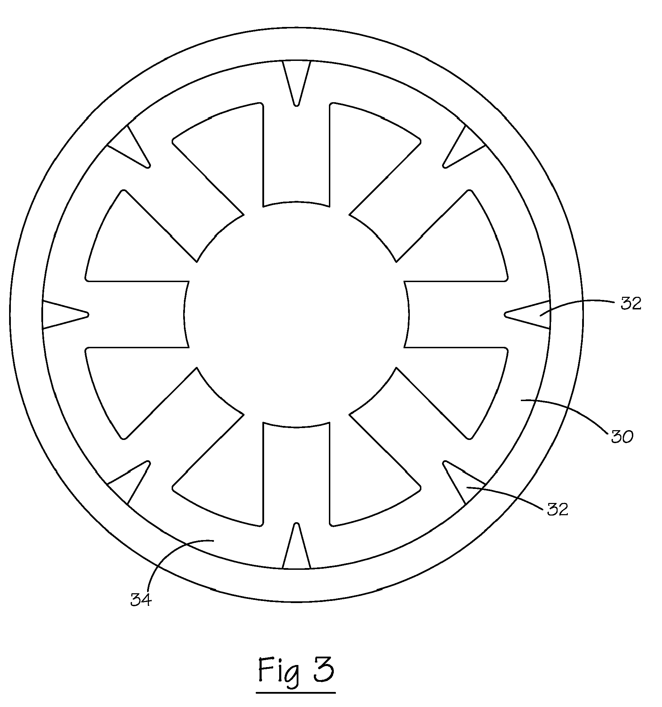

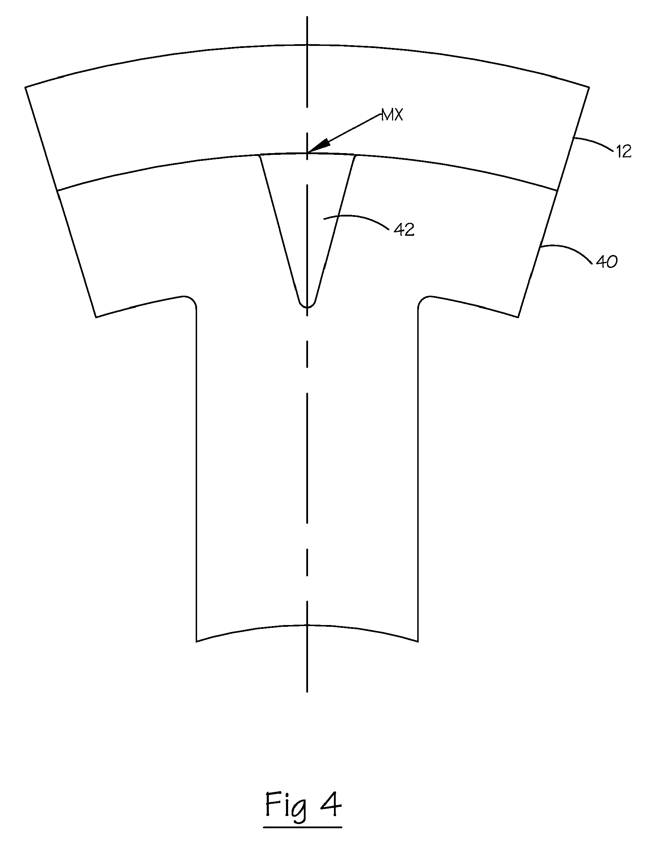

Figure 3 shows a stator core 30 according to an embodiment of the invention. Notches 32 have been provided in the laminations making up the stator core, specifically in the back-iron 34 of the stator core. Preferably the notches are centred about the centre-line of the stator poles, though in some embodiments they can be offset from the centre-lines. In accordance with good practice, the root of the notch is radiussed to avoid unnecessary stress raising. The notches preferably extend into the stator pole further than the radial length of the back-iron 34 of the stator core, though in some embodiments they may be less than the radial length of the back-iron 34 of the stator core. An enlarged view of a segment 40 of the core is shown in Figure 4. The effect of the notch 42 is to reduce the stiffness of the core in the region of the poles, so that, when assembled into the frame with an interference fit, the core deflects more than it would have done in the absence of the notches. This increase in deflection of the core in turn reduces the stress in the frame. Calculations show that the maximum stress in the frame still occurs at the centre-line of the pole (point MX in Figure 4), but has reduced to 76MPa at 20oC from the 95MPa without the notch (Figure 1) and has reduced to 106MPa at -40oC from the 120MPa without the notch (Figure 2).

This reduction in stress in the frame gives extra freedom to the designer, allowing the benefit to be taken as an extended lower temperature limit without risk of fracture of the frame; an extended higher temperature limit without risk of loss of transmission of torque; a thinner frame; etc.

In the exemplary stator shown in Figures 3 & 4, the void produced by the V-shaped notch is filled with air. In other embodiments, the notch is filled with a cooling fluid which abstracts heat from the stator lamination. The heat can be passed to the frame for dissipation or recovery, or the fluid can be connected to a heat exchanger of conventional type. For example, the coolant could be pumped into a manifold which abuts one axial end of the core and which has ports which feed coolant into one or more notches. At the other end of the core a second manifold can receive the coolant from the notch(es). The manifolds may be supplied by suitable pipes or by a cooling circuit embedded in the stator frame. After passing through the notches, the coolant may be transferred to a heat exchanger and cooled before being returned to the first manifold. The coolant may be circulated by a coolant pump. The back-iron 34 may form a seal with the frame to contain the coolant inside the notches and/or the coolant may be retained by a suitable liner inside the notches.

The angular extent of the V-shaped notch and the radial depth of the notch are two parameters which the designer can use to control the stiffness of the core. Making the notch very deep would impair the magnetic performance of the core by increasing the path length of flux travelling around the back-iron, while making it very shallow would not produce any significant change in the stiffness of the core. When designing the core to meet a particular performance requirement of the machine, the designer would trade off some magnetic performance for improved flexibility of the core until a suitable compromise is reached. This point is likely to occur when the radial depth of the notch is a little longer than the radial depth of the back-iron (between the poles), but some variation in this would be expected due to the differing designs of laminations.

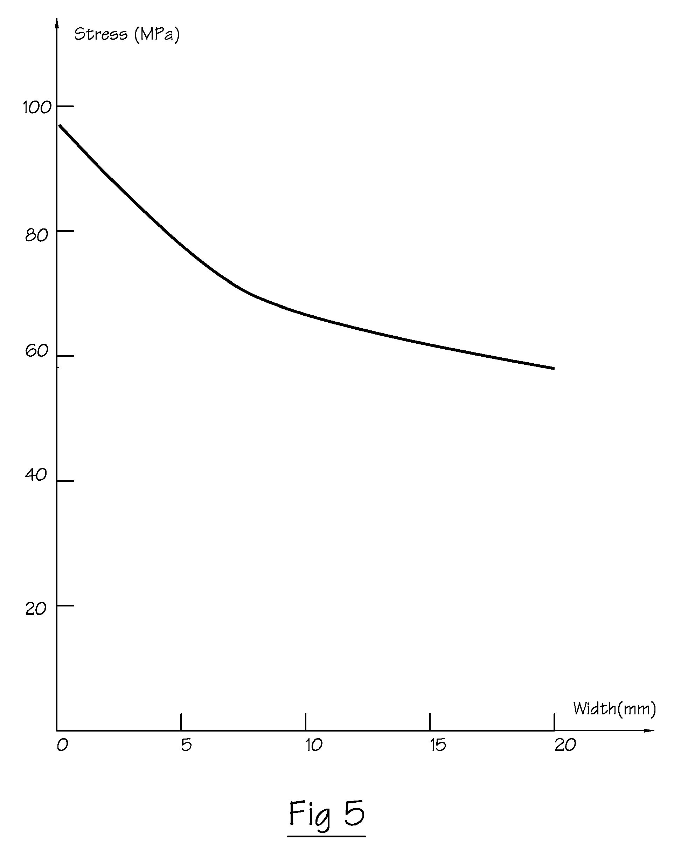

Similar considerations apply to the angular width of the notch. As the width (i.e., the angular span) of the notch increases from a near-zero dimension, the stress in the frame falls. Figure 5 shows a typical curve of the variation of frame stress for the notch shown in Figure 4. It is seen that there is an initial large benefit and then a levelling off. There will be some degradation of the magnetic performance of the core as the notch width increases. However, the limiting consideration is likely to be the reducing contact force between the core and the frame, which, with very wide notches, would reduce to a level where it would be unable to transmit the required torque.

Taking all these considerations together it has been found that making the radial depth of the notch slightly greater than the radial length of the back-iron and making the chord of the angular extent 20 to 50% of the radial depth would give a useful decrease in stiffness of the core without a significant penalty in magnetic performance. These dimensions can be used as a starting point for an optimisation procedure for any particular lamination.

The discussion above has used a triangular notch to illustrate the embodiments of the invention. While triangular notches are preferable since they have the least impact on the magnetic performance, other shapes are possible. For example, the notch could be rectangular (preferably with radiussed corners to reduce stress in the core) or some other convenient shape.

The discussion above has described the invention in relation to a stator core and surrounding frame. It is also possible to apply the invention to a rotor core and the shaft which carries it. One method of securing the rotor core to the shaft is to use an interference fit. In order to reduce stress in the rotor shaft when assembled into the core, notches may be provided around the bore of the rotor core following the same principles as disclosed above.

The skilled person will appreciate that variation of the disclosed arrangements are possible without departing from the invention. Accordingly, the above description of several embodiments is made by way of example and not for the purposes of limitation. It will be clear to the skilled person that minor modifications can be made to the arrangements without significant changes to the operation described above. The present invention is intended to be limited only by the scope of the following claims.

## Claims

1. A stator core for an electrical machine, the stator core defining a generally annular portion with stator poles extending radially inwards from the generally annular portion, wherein one or more notches in an outer profile of the generally annular portion extend from the outer profile radially inwards, each notch being disposed angularly between sides of a respective stator pole and extending into the generally annular portion over at least half of a radial extent of the generally annular portion.

2. A stator core as claimed in claim 1, each notch being centred on a radius coinciding with a centre of the respective stator pole.

3. A stator core as claimed in claim 1 or claim 2, each notch radially extending beyond a radial extent of the generally annular portion into the respective stator pole.

4. A stator core as claimed in any preceding claim, each notch angularly extending over a chord, the chord being between 20% and 50% of a radial depth of the notch.

5. A stator core as claimed in any preceding claim, each notch having sides extending radially and angularly outward from an inner notch root.

6. A stator core as claimed in claim 5, each notch having a radiussed profile in the region of the inner notch root.

7. A stator core as claimed in any preceding claim, each notch extending axially over an axial extent of the stator core.

8. A stator core as claimed in any preceding claim formed from a stack of laminations stacked together to form the stator core.

9. An electrical machine comprising a stator core as claimed in any preceding claim and a frame holding the stator core, the stator core and frame being an interference fit.

10. An electrical machine as claimed in claim 9 comprising a coolant supply connected to the one or more notches to supply coolant to the one or more notches.

11. An electrical machine as claimed in claim 9 or claim 10, wherein the electrical machine is a switched reluctance machine.

12. A lamination shaped to be stacked with one or more other laminations to form a stator core as claimed in claim 8.

13. A method for making a stator core to be held in a frame of an electrical machine by means of an interference fit, the method comprising preparing a stator core design by placing one or more notches in an outer profile of the stator core and adjusting the configuration of the notches to reduce stress in the frame when the stator core is assembled in the frame.

14. A method as claimed in claim 13, wherein adjusting the configuration of the notches comprises adjusting the configuration of the notches to reduce stress in the frame when the stator core is assembled in the frame while keeping an increase in flux path lengths in the machine to an acceptable level.

15. A method as claimed in claim 13 or 14 the method including making a stator core according to the stator core design.
